# EUROPEAN PATENT APPLICATION

(11) **EP 1 067 514 A1**
(43) Date of publication of application: **10.01.2001**
(21) Application number: 99113266.3
(22) Date of filing: 08.07.1999
(51) Int. Cl.: G10L 15/26

(54) **System for automatic speech recognition**

(71) Applicant: Sony International (Europe) GmbH, 10785 Berlin (DE)
(72) Inventor: Giron, Franck, Dr., c/o Sony Int. (Europe) GmbH, 70736 Fellbach (DE)
(74) Representative: MÜLLER & HOFFMANN Patentanwälte

(57) **Abstract**

A system for automatic speech recognition based on feature information derived from an acoustical speech input is suggested. The system comprises input means (31) which is adapted to receive an analog acoustical speech input (S) and which is capable to provide analog electrical output signals which are representative for said speech input (S). Analog-to-digital conversion means (34) is provided which is adapted to convert said analog electrical output signals into equivalent digital electrical output signals. Further, feature deriving means (35) is provided which is adapted to derive and supply said feature information from said digital electrical output signals. According to the invention said input means (31) comprises a plurality of vibration receiving members, each of said vibration receiving members is adapted to be essentially responsive to distinct vibrational/acoustical properties.

## Description

The present invention relates to a system for automatic speech recognition according to the wording of Claim 1.

Nowadays, automatic speech recognition (ASR) becomes more and more important. In many technical and commercial activities methods and devices for automatic speech recognition are used to realize interfaces between a human user and technical equipment so as to reduce the burden of direct personal assistance and support.

Methods and devices for automatic speech recognition in the state-of-the-art utilize in general at least three stages of preprocessing.

First of all in a input stage an input means is provided to receive an analog acoustical input, e. g. a human speech input, and to convert the received analog acoustical signal into a analog electrical output signal which is representative for said speech input. Secondly, the provided analog electrical output signal is converted into a digital equivalent by analog-to-digital conversion means. In a third step the set of digital electrical output signals is processed to derive distinct properties or features describing the speech input. Usually, features are generated from a discrete Fourier transform of the frames.

On the basis of a language model for instance the statistical distribution of phonemes may be analyzed and applied to the digital data. To each speech fragment a statistical state may be assigned. The sequence of successive speech fragments, i. e. the sequence of the assigned statistical states, may be described in general by a stochastic state transition network. The sequence of successive speech fragments or phrases can therefore be described by the probability that e. g. a first state is followed by a second state and by the probabilities for the features generated for a fragment given for a particular state.

Besides the pure stochastic approach the so called auditory models of speech recognition have been developed as a different way for generating features. The use of auditory models in ASR is based on the assumption that a more reliable speech encoding process may be possible if the process itself follows or simulates the essential properties of the human auditory system, i. e. the inherent activities of the human listener. Additionally, stochastic methods may be involved for the generation of features.

A major drawback of the auditory models as well as of the stochastic and probabilistic methods for ASR is the tremendous computational load, as the state-of-the-art models are majorly based on computational simulations and solutions after digitizing the speech input. A further drawback is that most known models and devices utilize a discrete and finite sequence of frames or speech fragments when analyzing the input speech signal. Consequently, the known methods and devices do not use a continuously working analyzing process.

It is therefore an object of the present invention to provide a system for automatic speech recognition which avoids the computational burden of methods and devices in the art.

A solution for this particular object is achieved by the system for automatic speech recognition of Claim 1. Preferred embodiments of the inventive system for automatic speech recognition are within the scope of the dependent claims.

The inventive system for automatic speech recognition based on feature information derived from an acoustical speech input comprises at least input means, analog-to-digital conversion means, and feature deriving means. The input means is adapted to receive an analog acoustical speech input and it is capable to provide analog electrical output signals which are representative for said speech input. Analog-to-digital conversion means is adapted to convert said analog electrical output signals into equivalent digital electrical output signals. Feature deriving means is adapted to derive and supply said feature information from said digital electrical output signals. Said input means further comprises a plurality of vibration receiving members. These vibration receiving members are adapted to be essentially responsive to distinct vibrational/acoustical properties of said speech input, in particular distinguished from each other with respect to the distinguished vibration receiving members. They are further adapted to oscillate upon response, and the input means is adapted to generate an electrical signal according to the vibrational state of at least a part of said members.

It is therefore a basic idea of the present invention to use a mechanical hardware solution to implement some of the steps of processing the speech input at a mechanical or acoustical level.

State-of-the-art devices and methods do not classify the analog speech input before digitizing. Known methods and devices transform the analog acoustical speech input into analog electrical signals by using microphones, for instance. Then electronical or software methods are applied to classify the information content of the speech input. For example critical band-pass filters which work in parallel are used. In many cases the stage of band-pass filters - which is computational intensive - is approximated by Fourier transform methods.

Instead, the invention classifies the speech input in the early receiving stage by using a plurality of vibration receiving means which are responsive to particular properties represented and carried by the speech input.

As this pre-processing step takes place before digitizing the whole information content of the analog acoustical speech input can be used to extract the properties of each speech phrase. Furthermore, the computational load of digital band-pass filtering and/or of Fourier transforming is avoided.

In a further embodiment of the inventive system said vibration receiving members are essentially responsive to distinct frequency ranges. These frequency ranges may be in general distinguished from each other with respect to distinguished vibration receiving members. In some applications and preferred embodiments of the inventive system for automatic speech recognition these frequency ranges may be essentially identical for the distinguished vibration receiving means or for groups of them.

In the following and throughout the description and the claims the notations "vibration receiving member" and "sound receiving member" are used equivalently, depending on whether or not the distinct members are excited by sound or vibration directly.

It is preferred that said frequency ranges are defined essentially by the characteristic or natural frequencies of each of said vibration receiving members. Furthermore, the distinct frequency ranges of each of said vibration receiving means may be defined by the damping which is applied to each of said vibration receiving members. According to the fundamental physical properties of the harmonic oscillator the characteristic or natural frequency of an oscillator depends on the external and the internal frictional forces which act on the oscillator upon its movement. These frictional forces cause the effect of damping of the vibrational amplitude, in particular, when leaving the characteristic or natural frequency.

In a further advantageous embodiment said plurality of vibration receiving members is built as a resonator array, in particular as a part of said input means.

Consequently, in the application of the inventive system, sound due to the speech input enters the input means, thereby exciting the plurality of vibration or sound receiving members. Each of the vibration or sound receiving members is then forced to a more or less oscillating movement according to the frequency and amplitude distribution of the received speech input. The oscillating amplitude of each of said vibration or sound receiving members depends on the particular frequency range of each of said vibration receiving members. If the frequency content of the speech input fits to the frequency range and in particular to the natural or characteristic frequency of one of said vibration or sound receiving members that particular member oscillates with a reasonable or maximum amplitude, while others with differing frequency ranges or characteristic frequencies are forced to oscillate with a much lower amplitude, if any.

The higher the number of vibration or sound receiving members within the plurality or the resonator array the more characteristics and features can be derived acoustically or mechanically from the speech input before digitizing.

In a particular embodiment of the preferred inventive system for automatic speech recognition the natural or characteristic frequencies may be chosen as integer multiples of a lowest or fundamental frequency. With such an arrangement of a frequency distribution with the distinguished frequency ranges of the distinguished vibration or sound receiving members the resonator array acts as a mechanical device for Fourier transforming the speech input. Therefore, the necessity of digitally and computational Fourier transforming the A/D-converted speech input is avoided, completely, and, consequently, the respective electronical computational load disappears.

It is of particular advantage to manufacture said resonator array and/or said plurality of sound or vibration receiving members as an integrally formed element or part of said input means. Under these circumstances difficulties of mechanical coupling are avoided in particular in the case of minimizing the linear dimensions and the geometry of the system.

It is a further advantage when for each said vibration receiving member a cavity is provided which is adapted to embed in each case the assigned vibration receiving member. A cavity in each case acoustically and mechanically isolates the embedded vibration receiving member from its neighborhood. Therefore, acoustical and mechanical interactions, in particular in the sense of acoustical interference and superposition, between adjacent vibration receiving members are avoided, and furthermore signal distortions on the primary level of mechanical or acoustical pre-processing the speech input is also avoided.

Each of said vibration or sound receiving members, i. e. each of said resonator elements, may be adapted as a resonating cantilever, spring, or the like. The cantilever may be linearly elongated with a particular mass and tensile strength distribution, where the oscillating movement is essentially transversely to the cantilever's linear extension.

For the transducing process - transducing the acoustical entity into an electrical equivalent - each of said vibration or sound receiving members is adapted to act as an inductively, capacitively, and/or piezo-resistively coupled device, or the like. The electrical output signal may therefore be measured as a modulation in the respective voltage, current, and/or electrical resistance.

In the case of a piezo-resistive coupling each of said vibration or sound receiving members may at least comprise as a part a piezo-resistive material. Upon the bending or deflection of the distinct member the resistance of the incorporated piezo-resistive material or of the member itself changes in time due to its oscillation. It is therefore possible to measure the resistance of each of said sound or vibration receiving members.

According to a further embodiment each of said vibration receiving members at least comprises a piezo-resistive Wheatstone bridge. This measure provides the time-varying resistance, voltage, and/or current value upon the deflection and bending state of each of said voltage or sound receiving members.

In a further embodiment a plurality of vibration receiving members is arranged on a common support, where said common support is adapted to be responsive - in particular in its entirety - to said speech input by means of a mechanical vibration or oscillation. Further, according to this particular embodiment, shielding means is provided to avoid said speech input to affect the vibration or sound receiving members directly. In this embodiment the support is moved back and forth according to the acoustical wave of the speech input. The back and forth movement occurs with the frequency distribution of the speech input. According to the inertial forces each of the vibration or sound receiving members are also deflected and they oscillate according to their assigned frequency range. That means, each of the members does not interact with the pressure distribution of the sound wave of the speech input directly. But the support of the plurality of members is forced to oscillate as in the case of the membrane of a conventional microphone.

Therefore, according to a further preferred embodiment, the common support of the plurality of vibration or sound receiving members is provided as a membrane, where the membrane is mechanically and/or electrically coupled to the remainder of the system.

The shielding for avoiding direct acoustical interaction of the speech input with the vibration receiving members may cover said plurality in its entirety. In the case where each of said members has its own cavity to be isolated from each other, each cavity may be covered by the shielding and therefore completely closed and they remain acoustically and mechanically isolated from each other.

For adjusting the frequency ranges and/or the damping properties for each sound or vibration receiving member a gas and/or a fluid can be provided as an embedding medium. The particular embedding medium may embed the complete resonator array or - in the case of separate cavities for each distinct member - the cavities for each members are filled with the distinct medium.

To further adjust the frequency range of each of said members of the plurality of sound or vibration receiving members the geometrical properties, and in particular the length, the width, and the height of the members, and/or the mechanical properties of the members, in particular the mass distribution and the distribution of tensile strength or the like, are adapted to define the characteristic frequency and/or the damping properties of each of said vibration or sound receiving members and therefore the distinct frequency ranges.

In some conventional methods and devices for automatic speech recognition the so called auditory models are used which utilize knowledge about signal processing of acoustical impacts within the inner human ear as well as in the central nervous system. For instance, it is known to simulate the acoustical/ mechanical pre-processing of acoustical excitations in the cochlea as well as in the basilar membrane of the human ear.

In contrast, it is in accordance with a further preferred embodiment of the inventive system for automatic speech recognition that a - in particular linearly extending - cavity is provided for embedding the plurality of sound or vibration receiving members and/or for said common support, in particular adjacently to its boundary. Further said cavity is adapted to receive said speech input through an aperture and to allow a speech input to interact according to the principles of superposition and/or to standing acoustic waves, so as to implement the acoustical properties of the human cochlea and/or the human basilar membrane.

This opens the possibility to have a system for automatic speech recognition which simulates in an equivalent mechanical or acoustical way the properties of the inner human ear. For that reason it is preferred to have a system in accordance with the invention at least in part as a micro-/nano-structure or -engine in particular at least partly manufactured in a micro-/nano-machining or -engineering process.

In a further preferred embodiment at least parts of the system are manufactured from a polymer solution by means of an optical projection and/or from a solid material by a lithographic and/or etching process. Here one arrives at the advantages known from VLSI-circuits and its reduced linear dimensions. The system may therefore at least partly be manufactured on a piece of silicon (Si), germanium (Ge), galliumarsenide (GaAs) or the like, in particular co-existing with electrical circuity and in particular using VLSI nano-technology.

In contrast to state-of-the-art systems, signal conditioning and evaluation means between said input means and said analog-to-digital conversion means may be provided for conditioning and evaluating said analog electrical output signals received from said input means. Here it is possible to include further auditory models, for instance the hair-cell/synapse model - on the basis of the almost original analog data into the system for automatic speech recognition.

With the features of the inventive method for automatic speech recognition the problems of the conventional computational load and further the conventional lack of continuity resulting from a frame based method of known methods and devices for automatic speech recognition are overcome by using a hardware solution on the basis of mechanical and acoustical principles to implement and fuse different stages of data processing. This new hardware solution allows for the implementation of auditory models in real applications.

The herewith proposed approach by using a resonator array integrates a part of the necessary conventional critical band-filter banks together with the conventional microphone. This indeed is realized by the inventive resonator array which performs a band-pass filtering on a specially designed microchip using microtechnology and microengineering.

The following stages can therefore then, for example, be performed on a specially designed microchip using an application specific integrated circuit (ASIC) technology. Both chips - the resonator array chip and the ASIC - are connected together, for example, by a flexible wire connection or by an alternative technology. It is also possible to integrate the resonator chip and the ASIC on a single microchip.

The resonator array may be a microchip manufactured using piezo-resistive technology or an alternative one. In principle, this device consists of an array of mechanical oscillators. Each of these oscillators can be, for example, a cantilever, which vibrates at its natural frequency and thus constituting a mechanical band-pass filter. The corresponding vibration is converted into an electrical signal by means of the piezo-resistive Wheatstone bridge.

The resonance frequencies of the cantilevers can be chosen to correspond to predefined characteristics of the applied auditory model. It may also a frequency distribution be used which allows for a mechanical or acoustical analog Fourier transformation of the speech input. The basic problem is the relative wide spectral range which is needed to cover the range of audible sound. The frequency range for tonal hearing is usually placed in average between 20 Hz to 20 kHz, whereas this range is dependent on the person and its age.

If this particular range cannot be covered by a resonator array based on longitudinal - that is linear extended - cantilevers, it is also possible for lower frequencies to use another design in spiral form or in a hanged structure.

Furthermore, the bandwidth of each of the cantilevers is relative narrow, naturally. This prevents them to be used directly as a band-pass filter for auditory models, since these filters should cover a much wider frequency range. To increase the bandwidth, damping can be provided to the cantilevers by adding a mass, by adding an embedding medium other than air and/or by modifying the tensile strength distribution. The composition of the vibration/sound receiving members may introduce internal frictional forces and therefore damping.

The integration of many different types of resonators on a single structure is under certain circumstances a necessary step to cover the desired frequency range necessary for auditory models to be applied for automatic speech recognition.

The coupling of sound and vibration to the resonator array can be, as mentioned above, performed in different ways: the direct coupling and the membrane coupling.

In the membrane coupling the complete resonator array is placed on a membrane fixed in a way or another to allow its vertical movement similar to the membrane of a microphone.

The connection to the ASIC is done by a flexible connection, in particular by a flexible wire. The main advantage of this construction is the increased vibration amplitude by the whole resonator array due to the inertia of the complete structure. Moreover, this structure allows the enclosing of cantilevers in different media thereby increasing the possibility of choice in damping and in sensitivity for each distinct resonator. Design variations are possible within the range of vertically integrated structures where the ASIC could be placed under the resonator array and the membrane instead of beside.

In the direct coupling version the resonator array is used directly to measure the sound arriving on it. Therefore, the sound and the pressure distribution arriving excites the distinct resonators directly. A coupling between the resonator array and the ASIC is performed without the use of an intermediate membrane or a flexible wire. Here also the vertical integrated structure could be a possible design.

Depending on the size of the resonator array it is also possible to integrate some functionalities of the auditory model which would be placed in the signal functioning part on the ASIC. The piezo-resistive technology allows the integration of simple electrical components such as transistors or resistances or the like. It is therefore possible to integrate a half-wave rectification and perhaps an amplitude compression which are parts of the so called hair-cell/synapse model.

The mentioned ASIC microchip collects the electric signals produced and supplied by the resonator array to perform further processing. All channels are, for example, first conditioned in a similar way as in the hair-cell/synapse model and then digitized to finally compute feature information and in particular feature vectors which are needed for the speech recognition.

Depending on the final design of the resonator array the possibilities of integration of further elements a concrete realization of the ASIC can be very different.

For instance, the signal conditioning part consists of an amplification stage, half-wave rectification, signal compression, short-term adaptation, and low pass filtering for each separate channel. A goal of this part is to extract information from the speech signal which is more representative of the process involved in the auditory system at the cochlea level.

In this implementation it is possible that different steps will be performed in an analogical way; this is the major difference in contrast to methods and devices from the state-of-the-art since this possibility can only be offered by the use of a resonator array which delivers distinct analog electrical signals.

After the conditioning part the bandwidth of the original signal is considerably reduced. The signals can then be digitally converted at a much lower rate than possible in the state-of-the-art. Finally, further processing in the final feature computation module can be performed numerically. The output of this stage can then be used in the training and the recognition module by traditional methods.

The present invention will be understood in more detail by means of the accompanying drawing in which
- **Fig. 1**: shows a block diagram of a conventional system for automatic speech recognition based on auditory modelling,
- **Fig. 2**: shows a block diagram of an embodiment of the inventive system for automatic speech recognition,
- **Fig. 3**: shows in a perspective top view details of a further preferred embodiment of the invention,
- **Fig. 4**: shows a schematical and cross-sectional view of a further preferred embodiment of the inventive system for automatic speech recognition, and
- **Fig. 5**: shows a schematical and cross-sectional view of a vibration receiving member in an embodiment of the inventive system.

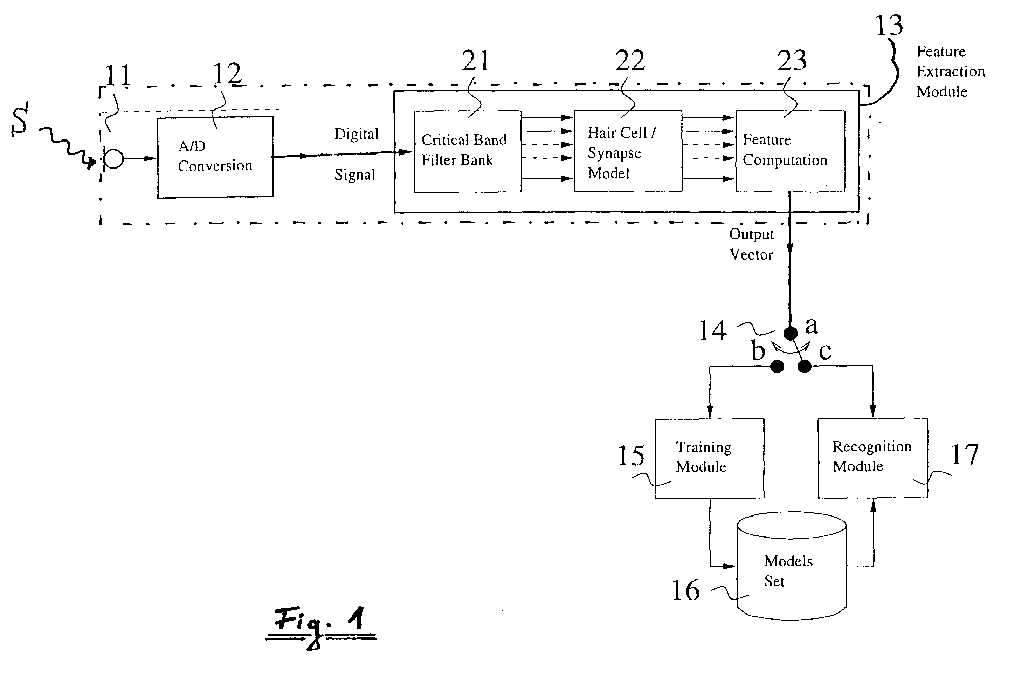

Fig. 1 shows in a diagrammatical way the essentials of state-of-the-art systems for automatic speech recognition based on auditory modelling.

An analog speech signal S enters a microphone unit 11 and is thereby transformed into an analog electrical signal. In a further stage an analog-to-digital converter 12 converts the electrical equivalent of the acoustical signal S into a digital equivalent. This digital electrical output signal is then further processed by the so called feature extraction module 13 (FEM) which consists of a critical band-filter bank 21, a hair-cell/synapse model unit 22 - or units for alternate models - and a so called feature computation unit 23 which computes the feature vector and supplies it to the output.

In general, prior to recognition models of the speech signal using the feature vectors need to be trained which is indicated by the path a-b in Fig. 1. Usually this is done using a large data base comprising many different speakers. The training phrases are input and processed in a training module 15. The result of training is fixed in the language model unit 16. After training, the system can be used by the customer or the applicant for recognition, which is indicated by the path a-c in Fig. 1. The recognition module 17 therefore employs the language module and the training data evaluation fixed in module 16.

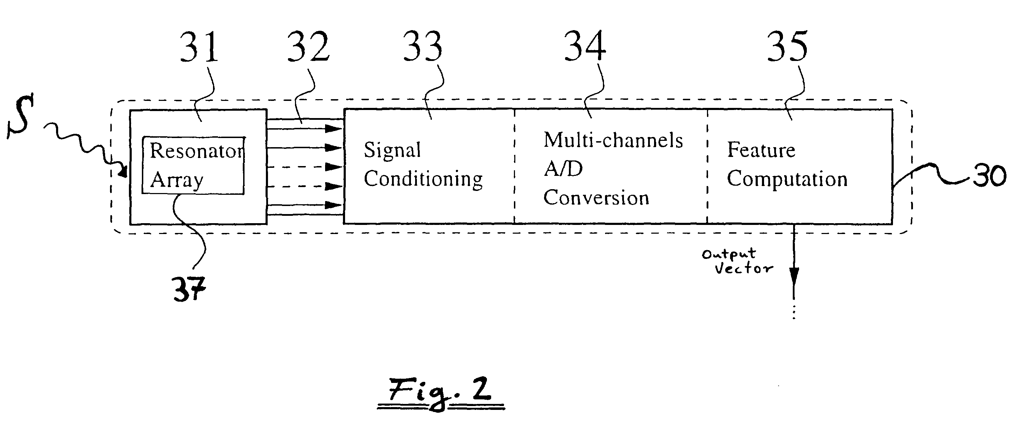

In contrast, Fig. 2 shows a block diagram for an embodiment of the inventive system for automatic speech recognition.

The input means 31 may be designed as a resonator array 37. This first module is a direct mechanical realization and integration of a part of the conventional critical band-filter bank and of the microphone, 21 and 11 in Fig. 1, respectively. This is realized by the resonator array 37 which performs the band-pass filtering on a specially designed microchip. By the connection 32 the input means 31 is connected to the new feature extraction module 30 built up by the segments 33, 34, and 35 for signal conditioning, multi-channel analog-to-digital conversion and feature computation, respectively. Feature computation unit 35 generates and completes feature vectors which are then output and further processed in the conventional manner as shown in Fig. 1.

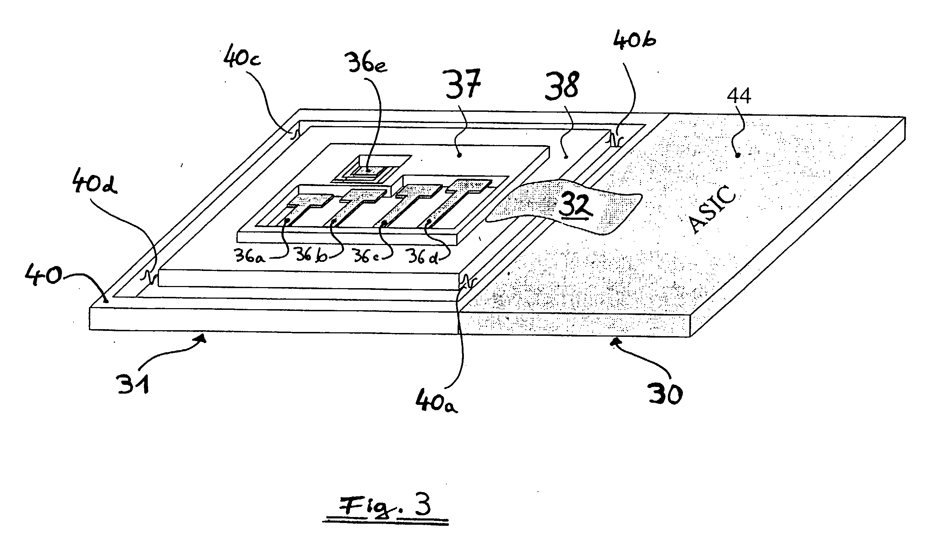

Fig. 3 shows a perspective top view of a preferred embodiment of the inventive system for automatic speech recognition with respect to the membrane coupling.

The input means 31 consists of a frame 40 to which a resonator array 37 on a membrane 38 is mechanically flexibly coupled by means of spring elements 40 a - d. The resonator array 37 consists of cantilevers 36a - d and a further resonator 36e in spiral form. A flexible electrical and mechanical connection 32 is provided for contacting and connecting the array 37 to the further processing feature extraction module 30 contained in ASIC 44.

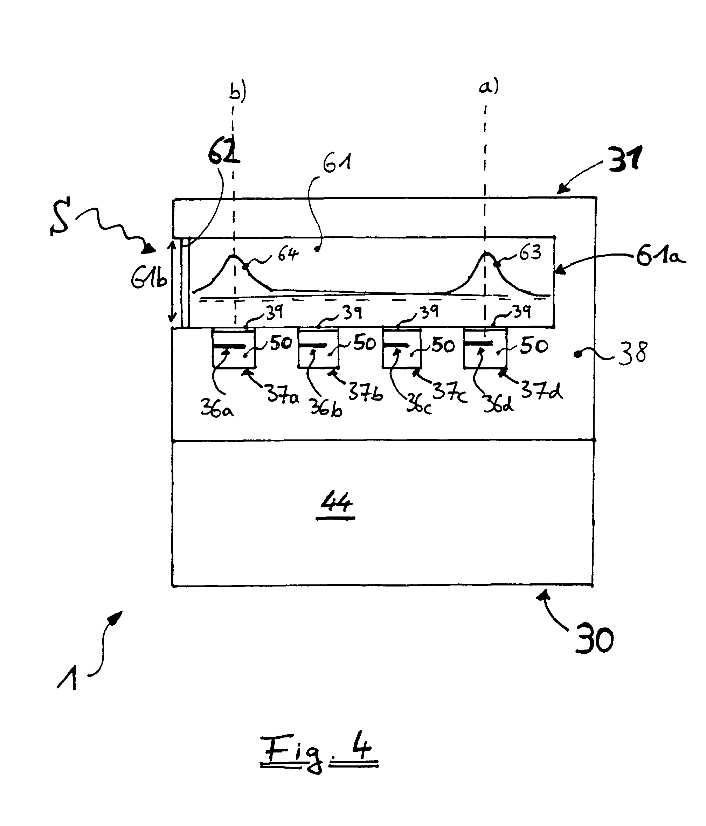

Fig. 4 is a cross sectional view of a further advantageous embodiment of the inventive system for automatic speech recognition realizing in a mechanical and acoustical analogous way the properties of the human cochlea and/or the basilar membrane. In this example, feature extraction module 30 and ASIC 44 are connected below the top input means 31.

Input means 31 comprises a cavity 61 of linear, tubular, or channel-like shape. Cavity 61 has a dead end 61a and an aperture 61b through which sound S may enter the cavity 61. Aperture 61b may be covered by a protecting membrane 62 and cavity 61 may be filled with a particular medium other than air.

In a lower boundary of the cavity 61 cavities 37a to 37d are formed to comprise resonator elements or sound/vibration receiving members 36a to 36d. These cavities 37a - d are covered by flexible shielding means 39 and they are filled with a particular medium 50.

When the sound S enters cavity 61 a pressure distribution 63, 64 is generated according to the acoustical laws and in particular according to the principles of superposition and interference of sound waves. Due to the dimension of the cavity 61 a standing wave may be generated with a maximum amplitude depending on the frequency distribution of the sound S.

A pressure distribution or amplitude distribution 63 within cavity 61 occurs for a low frequency component at position a) of resonator 36d. On the other hand, for a high frequency component within sound signal S the pressure or amplitude distribution 64 at position b) of cantilever 36a is generated.

Therefore, positioning a multiplicity or plurality of sound or vibration receiving members 36a to 36d along the linear dimension of cavity 61 allows the adjacent sound or vibration receiving members to locate spaced apart pressure distributions and therefore to distinguish different frequency components within sound S.

This is a direct mechanical and acoustical realization of the acoustical interactions of sound within the inner of the human ear and in particular within the cochlea and/or the basilar membrane of the human ear.

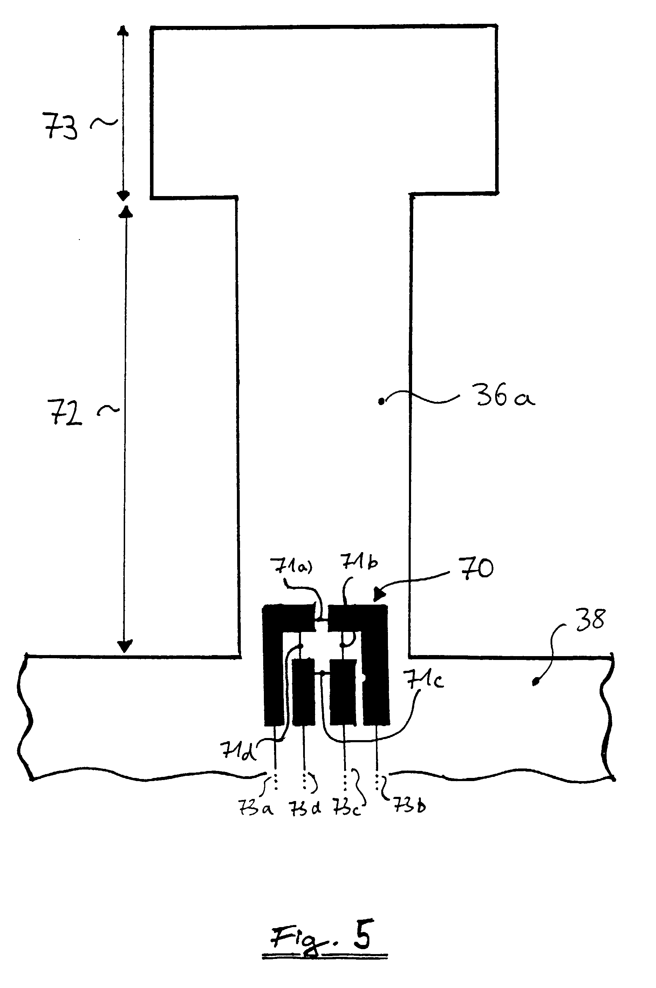

Fig. 5 is a schematical side view of a vibration and sound receiving member 36a in which a piezo-resistive Wheatstone bridge 70 is incorporated.

The Wheatstone bridge 70 consists of piezo-resistances 71a to 71d. According to the different mechanical tensions along the linear dimension of sound and vibration receiving member 36a the resistances of piezo-resistances 71a - d alter according to the deflection and oscillation of element 36. From the time variation an electrical signal equivalent to the distinct respective sound component may be derived.

Member 36a of Fig. 5 has a paddle structure comprising a linear cantilever part 72 and a paddle section 73 with an end mass. Lines 73a - d are used to pick up the measurement data.

## Claims

1. System for automatic speech recognition based on feature information derived from an acoustical speech input comprising:
- input means (31) which is adapted to receive an analog acoustical speech input (S) and which is capable to provide analog electrical output signals which are representative for said speech input (S), and
- feature deriving means (30) which is adapted to derive and supply said feature information from said electrical output signals,
**wherein**
- said input means (31) comprises a plurality of vibration receiving members (36a, b, c, d, e),
- each of said vibration receiving members (36a, b, c, d, e) is adapted to be essentially responsive to - in particular distinguished - acoustical properties of said speech input (S) and further to oscillate upon response, and
- said input means (31) is adapted to generate an electrical signal according to the vibrational state of at least a part of said vibration receiving members (36a, b, c, d, e).

2. System according to claim 1, **characterized in** that
analog-to-digital conversion means (34) is provided which is adapted to convert said analog electrical output signals into equivalent digital electrical output signals.

3. System according to any of the preceding claims, **characterized in** that
said vibration receiving members (36a, b, c, d, e) are essentially responsive to distinct frequency ranges, in particular distinguished from each other.

4. System according to Claim 3, **characterized in** that
said frequency ranges are defined essentially by the characteristic frequencies of each of said vibration receiving members (36a, b, c, d, e) and/or by the damping being applied to each of said vibration receiving members (36a, b, c, d, e).

5. System according to any of the preceding claims, **characterized in** that
said plurality of vibration receiving members (36a, b, c, d, e) is built as an resonator array (37) in said input means (31).

6. System according to any of the preceding claims, **characterized in** that
said resonator array (37) and/or said plurality of vibration receiving members (36a, b, c, d, e) are formed as an integral part of said input means (31).

7. System according to any of the preceding claims, **characterized in** that
for each of said vibration receiving members (36a, b, c, d, e) a cavity (37a, b, c, d) is provided into which each of said vibration receiving members (36a, b, c, d, e) is embedded, as to reduce mechanical interactions of said vibration receiving members (36a, b, c, d, e).

8. System according to any of the preceding claims, **characterized in** that
each of said vibration receiving members (36a, b, c, d, e) is provided as a resonating cantilever, spring, and/or the like.

9. System according to any of the preceding claims, **characterized in** that
each of said vibration receiving members (36a, b, c, d, e) is adapted as an inductively, capacitively, and/or piezo-resistively coupled device, or the like.

10. System according to any of the preceding claims, **characterized in** that
each of said vibration receiving members (36a, b, c, d, e) comprises at least in part piezo-resistive material.

11. System according to any of the preceding claims, **characterized in** that
each of said vibration receiving members (36a, b, c, d, e) comprises a piezo-resistive Wheatstone bridge (70) so as to provide a time varying resistance, voltage and/or current upon the deflectional and/or vibrational state of said vibration receiving members (36a, b, c, d, e).

12. System according to any of the preceding claims, **characterized in** that
said plurality of vibration receiving members (36a, b, c, d, e) is arranged on a common support (38),
said common support (38) is adapted to be affected and responsive to said speech input, and
that shielding means (39) is provided to avoid said speech input to affect said vibration receiving members (36a, b, c, d, e) directly.

13. System according to Claim 12, **characterized in** that
said common support (38) is a membrane which in particular is flexible, and
said membrane is mechanically and electrically coupled to the remainder of the system (1).

14. System according to any of the preceding claims, **characterized in** that
for each of said vibration receiving members (36a, b, c, d, e) an appropriate gas or fluid is provided as an embedding medium (50) to adapt the damping properties for each of said vibration receiving members (36a, b, c, d, e).

15. System according to any of the preceding claims, **characterized in** that
the geometrical properties, in particular length, width, and height, and/ or the mechanical properties, in particular the mass distribution, the distribution of tensile strength or the like, of each of said vibration receiving members (36a, b, c, d, e) is adapted to define the characteristic frequency and/or the damping properties for each of said vibration receiving members (36a, b, c, d, e).

16. System according to any of the preceding claims, **characterized in** that
a - in particular linearly - extending cavity (61) is provided for embedding said plurality of vibration receiving members (36a, b, c, d, e) and/ or said common support (38) adjacent to its boundary,
said cavity (61) is adapted to receive said input speech (S) through an aperture (62), and
said cavity (61) is adapted to allow the input speech (S) to interact according to the principles of superposition and/or standing acoustical waves so as to implement acoustical properties of the human cochlea and/or basilar membrane.

17. System according to any of the preceding claims, **characterized in** that
it is, at least, partly manufactured as a micro-/nano-structure or -engine, in particular according to a micro-/nano-machining or -engineering process.

18. System according to any of the preceding claims, **characterized in** that
at least parts of it are manufactured from a polymer solution and/or from a solid medium by an optical projection, lithographic, and/or etching process.

19. System according to any of the preceding claims, **characterized in** that
at least parts of it are manufactured on a piece of silicon (Si), germanium (Ge), galliumarsenide (GaAs) or the like, in particular co-existing with electrical circuity and, in particular, using VLSI nano-technology.

20. System according to any of the preceding claims, **characterized in** that
signal conditioning and evaluation means (33) is provided between said input means (31) and said analog-to-digital conversion means (34), which is adapted to condition and to evaluate said analog electrical output signals received from said input means (31).
